**Europäisches Patentamt**

**European Patent Office**

**Office européen des brevets**

(19)

(11) Numéro de publication : **0 326 767 B1**

# FASCICULE DE BREVET EUROPEEN

(12)

(45) Date de publication du fascicule du brevet :
**11.03.92 Bulletin 92/11**

(51) Int. Cl.⁵ : **B62B 3/00,** A47F 5/13

(21) Numéro de dépôt : **88403142.8**

(22) Date de dépôt : **09.12.88**

(54) **Etagères escamotables pour réceptacle de stockage ou de transport, et réceptacles de ce genre équipés de telles étagères.**

(30) Priorité : **28.12.87 FR 8718216**

(43) Date de publication de la demande :
**09.08.89 Bulletin 89/32**

(45) Mention de la délivrance du brevet :
**11.03.92 Bulletin 92/11**

(84) Etats contractants désignés :
**BE ES IT**

(56) Documents cités :
**FR-A- 2 318 772**
**FR-A- 2 341 491**
**US-A- 3 288 484**
**US-A- 4 180 277**

(73) Titulaire : **ATELIERS REUNIS CADDIE**
**13, rue de la Mairie**
**F-67300 Schiltigheim (FR)**

(72) Inventeur : **Le Marchand, Alain**
**1, Rue de Vendée**
**F-67116 Reichstett (FR)**
Inventeur : **Frey, Jean-Pierre**
**32, Rue Molkenbronn**
**F-67380 Lingolsheim (FR)**

(74) Mandataire : **Tony-Durand, Serge**
**Cabinet Tony-Durand 77, rue Boissière**
**F-75116 Paris (FR)**

EP 0 326 767 B1

**Description**

La présente invention est relative à des réceptacles de stockage ou de transport -tels que des conteneurs fixes ou mobiles, ou des chariots de transport- dont au moins deux parois verticales opposées sont constituées par des grilles en fils métalliques.

Plus précisément l'invention concerne les réceptacles de ce genre, dans lesquels il est prévu une ou plusieurs étagères escamotables, montées articulées sur l'une des parois pour s'accrocher sur la paroi opposée dans leur position d'utilisation, par l'intermédiaire de crochets portés par leur bord libre. Un tel agencement permet d'utiliser le réceptacle correspondant de deux façons différentes suivant que ses étagères sont placées en position d'utilisation ou au contraire escamotées par relevage contre la paroi sur laquelle elles s'articulent.

Toutefois les moyens actuellement prévus pour assurer le maintien de telles étagères dans leur position d'escamotage sont peu pratiques. Par ailleurs les moyens prévus à cet effet sont ou bien relativement complexes et coûteux, ou bien trop simples pour être réellement efficaces.

C'est pourquoi la présente invention a pour but de réaliser un réceptacle du type en cause dont la conception est telle que les étagères escamotables de celui-ci soient maintenues de façon efficace dans leur position de relevage, et ce par des moyens très simples ne grèvant pas le prix de revient de l'ensemble.

A cet effet ce réceptable est caractérisé en ce que :

– chacune des étagères de celui-ci s'articule sur la paroi correspondante par l'intermédiaire d'un élément permettant une certaine liberté de coulissement de cette étagère vers le bas lorsqu'elle est relevée à la verticale contre cette paroi,

– cette même paroi comporte un fil horizontal qui se trouve situé légèrement au dessous du niveau des crochets du bord libre de chaque étagère, lorsque celle-ci est ainsi relevée,

– l'un au moins de ces crochets est réalisé de façon telle qu'il puisse s'accrocher sur ce fil horizontal, lorsque l'étagère correspondante a subi un tel coulissement vers le bas après avoir été relevée contre cette paroi.

Ainsi pour obtenir le blocage d'une étagère dans sa position d'escamotage, il suffit de la laisser coulisser légèrement vers le bas après l'avoir relevé à la verticale contre la paroi sur laquelle elle s'articule. Après accrochage sur le fil horizontal prévu à cet effet sur cette paroi, l'étagère correspondante se trouve parfaitement immobilisée et ne risque pas de retomber, par exemple sous l'effet de chocs ou de trépidations. Cependant elle peut être ultérieurement amenée à nouveau dans sa position d'utilisation par une manoeuvre très simple.

Un exemple de réalisation d'un réceptacle selon l'invention est décrit ci-dessous en référence au dessin annexé à simple titre indicatif, et sur lequel :

La figure 1 est une vue en perspective d'un réceptacle selon l'invention consistant en un chariot de transport,

La figure 2 est une vue partielle en coupe transversale de ce chariot selon un plan vertical, l'étagère unique de celui-ci étant représentée en position d'utilisation.

La figure 3 est une vue en coupe similaire de cette même étagère et de la paroi sur laquelle elle s'articule et ce, après relèvement de cette étagère dans sa position d'escamotage.

La figure 4 est une vue en perspective, à échelle différente, représentant l'un des crochets prévus sur le bord libre de cette étagère.

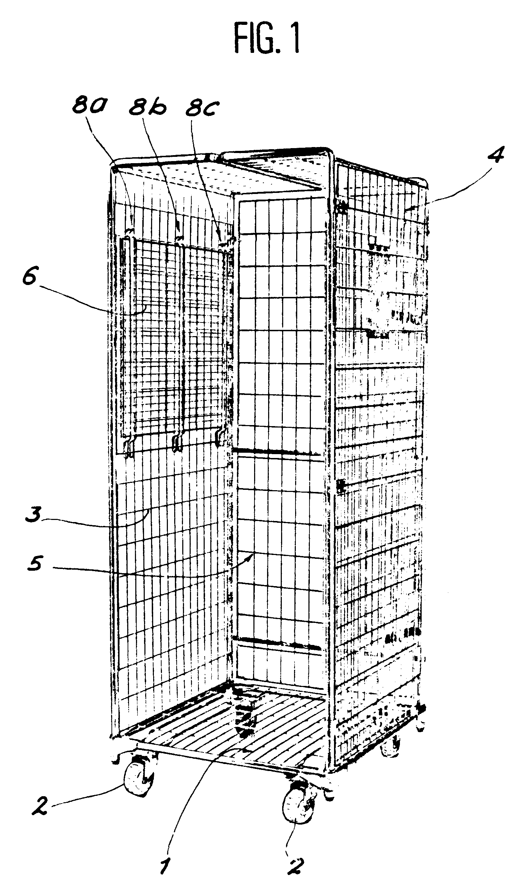

Le réceptacle représenté à la figure 1 consiste en un chariot comportant une plate forme inférieure 1 montée sur des roulettes 2. Au dessus de deux côtés opposés de cette plate-forme, il est prévu deux parois latérales verticales 3 et 4. Chacune de celles-ci est constituée par une grille formée par des fils métalliques entrecroisés et qui est entourée par un cadre en tube métallique.

L'une des deux autres parois du réceptacle ainsi constitué consiste également en une grille 5 en fils métalliques. Enfin la quatrième paroi peut être constituée par un panneau amovible ou bien une porte mobile à un ou deux battants, cette porte ou ce panneau pouvant eux-mêmes être constitués par des grilles en fils métalliques.

La présent réceptacle renferme une étagère unique 6 également constituée par une grille en fils métalliques. Sur l'un de ses bords cette étagère s'articule sur la paroi verticale 3, et plus précisément autour d'un fil horizontal 7 de cette paroi, lequel sert ainsi d'axe d'articulation. Sur son bord libre opposé, cette étagère comporte trois crochets 8a, 8b et 8c qui sont aptes à s'accrocher sur un fil horizontal 9 de la paroi 4 lorsque l'étagère est disposée à l'horizontale dans sa position d'utilisation. A cet effet ces crochets tournent leur concavité vers le bas lorsque l'étagère est placée dans cette position. Cependant, ainsi qu'il sera décrit plus en détail par la suite, ces crochets présentent une forme très particulière de façon à être en mesure de remplir une seconde fonction lorsque l'étagère est relevée à la verticale contre la paroi 3 dans sa position d'escamotage.

Les intervalles prévus entre les fils horizontaux constituant la paroi 3 sont tels que celle-ci comporte un fil horizontal 10 situé légèrement au-dessous du niveau où se trouvent placés les crochets 8a, 8b et 8c, lorsque l'étagère 6 est relevée à la verticale contre la paroi 3. L'écart E entre les fils 7 et 10 est donc déterminé en conséquence et à cet effet cet écart est quelque peut inférieur à la longueur de l'étagère 6.

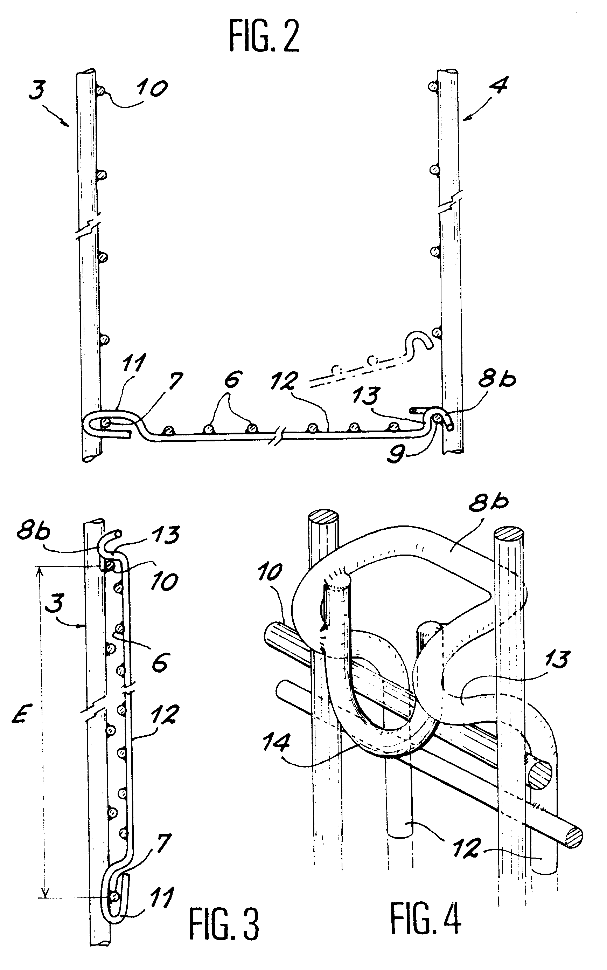

Celle-ci s'articule sur le fil horizontal 7 de la paroi 3 par l'intermédiaire d'éléments lui permettant une certaine liberté de coulissement vers le bas, lorsque cette étagère est relevée à la verticale contre cette paroi. Dans l'exemple représenté ces éléments d'articulation consistent en des anneaux 11 de forme oblongue entourant le fil 7 servant d'axe d'articulation. Ces anneaux sont constitués par les extrémités correspondants de trois paires de fils longitudinaux 12 faisant partie de la grille constituant l'étagère 6. Quant aux crochets 8a, 8b et 8c prévus sur le bord opposé de cette étagère, ils sont formés par les boucles prévues aux extrémités correspondantes de ces mêmes paires de fils longitudinaux 12. Chacun de ces crochets débute par une partie 13 qui fait saillie vers le haut lorsque l'étagère est disposée à l'horizontale dans sa position d'utilisation. Par contre, quand celle-ci est relevée à la verticale en position d'escamotage, cette partie 13 constitue un épaulement horizontal susceptible de venir s'appuyer sur le fil horizontal 10 de la paroi 3, après que l'étagère ait effectué un léger mouvement de coulissement vers le bas (voir figure 3).

Cependant l'un au moins des crochets de l'étagère, en l'occurrence son crochet médian 8b, comporte en plus un élément qui fait saillie vers le bas lorsque cette étagère est relevée à la verticale, cet élément étént apte à s'accrocher sur le fil horizontal 10 de la paroi 3 dans cette même position. Dans l'exemple représenté cet élément consiste en un arceau renversé 14 dont les deux branches latérales sont soudées sur les deus branches du crochet correspondant 8b (voir figure 4).

Ainsi après avoir relevé l'étagère 6 à la verticale contre la paroi 3, il suffit de la laisser légèrement coulisser vers le bas, ce qui est rendu possible par les anneaux oblongues 11, pour que d'une part les épaulements 13 viennent en appui sur le fil horizontal 10 et que d'autre part le petit arceau 14 du crochet médian 8b vienne s'accrocher sur ce même fil comme représenté sur la figure 4. Dans ces conditions, l'étagère 6 se trouve ainsi parfaitement verrouillée dans sa position d'escamotage. Elle ne risque donc pas de retomber accidentellement de façon intempestive, par exemple sous l'effet de chocs ou de trépidations.

Cependant la manoeuvre nécessaire pour obtenir ce verrouillage est très simple à réaliser et elle s'effectue en quelque sorte de façon automatique puisqu'il suffit de laisser retomber légèrement vers le bas l'étagère 6 après l'avoir relevée à la verticale. Il n'y a donc pas lieu de manoeuvrer des organes particuliers de verrouillage pour obtenir le blocage de l'étagère dans sa position d'escamotage.

De plus c'est par une manoeuvre aussi simple que l'on peut amener à nouveau l'étagère dans sa position horizontale d'utilisation. En effet il suffit de relever légèrement l'étagère pour obtenir son déverrouillage, après quoi elle peut pivoter librement dans sa position d'utilisation.

Cependant le réceptacle selon l'invention n'est pas limité au seul exemple de réalisation représenté. En effet ce réceptacle peut faire l'objet de nombreuses variantes et autres formes de réalisation. Ainsi, l'organe de verrouillage 14 prévu sur le crochet médian 8b pourrait être constitué par un élément autre que le petit arceau renversé 14. Eventuellement cet élément d'accrochage pourrait être remplacé par une forme particulière du crochet correspondant permettant à celui-ci de s'accrocher par lui-même, sans autre élément supplémentaire, sur le fil horizontal 10 de la paroi 3. Par ailleurs, les différents crochets pourraient être également réalisés de façon différente pour autant qu'ils puissent remplir deux fonctions, respectivement lorsque l'étagère est dans sa position d'utilisation et quand elle se trouve placée en position d'escamotage. D'autre part, il pourrait être prévu un organe de verrouillage tel que l'arceau 14 ou tout autre élément similaire sur les différents crochets au lieu qu'un tel élément soit prévu uniquement sur le crochet médian. Bien entendu, le nombre de ces crochets peut varier. De plus les anneaux 11 de forme oblongue peuvent être remplacés par tout autre élément approprié d'articulation permettant une certain liberté de coulissement de l'étagère 6 vers le bas lorsqu'elle est relevée à la verticale.

Il va de soi que le réceptacle selon l'invention peut comporter plusieurs étagères 6 ainsi agencées au lieu d'une seule. Par ailleurs au lieu de constituer un chariot de transport, le réceptacle selon l'invention peut constituer un conteneur, fixe ou mobile, pour le stockage ou le transport de marchandises diverses. Dans les différentes applications suceptibles d'être envisagées, ce réceptacle a l'avantage de pouvoir être transformé très facilement et rapidement en plaçant ses étagères intérieures soit en position d'utilisation, soit en position d'escamotage.

## Revendications

1. Réceptacle de stockage ou de transport -tel que conteneur fixe ou mobile, chariot de transport- dont deux parois verticales opposées sont constituées par des grilles en fils métalliques, et qui renferme une ou plusieurs étagères escamotables, articulées sur l'une de ces parois et s'accrochant sur l'autre dans leur position d'utilisation, par l'intermédiaire de crochets prévus sur leur bord libre, caractérisé en ce que :

– chacune de ces étagères (6) s'articule sur la paroi correspondante (3) par l'intermédiaire d'un élément (11) permettant une certaine liberté de coulissement de cette étagère vers le bas lorsqu'elle est relevée à la verticale contre cette paroi (3),

– cette même paroi (3) comporte un fil horizontal (10) qui se trouve situé légèrement au dessous du niveau des crochets (8a, 8b, 8c,) du bord libre de chaque étagère (6), lorsque celle-ci est ainsi relevée,

– l'un au moins (8b) de ces crochets est réalisé d'une façon telle qu'il puisse s'accrocher sur ce fil horizontal (10), lorsque l'étagère correspondante (6) a subi un tel coulissement vers le bas après avoir été relevée contre cette paroi.

2. Réceptacle selon la revendication 1, caractérisé en ce que chacun des crochets (8a, 8b, 8c), prévus sur le bord libre de chaque étagère escamotable (6), débute par une partie (13) coudée de telle façon qu'après relèvement de cette étagère à la verticale, elle constitue un épaulement horizontal susceptible de s'appuyer contre le fil horizontal (10) situé à ce niveau sur la paroi (3), sur laquelle s'articule l'étagère.

3. Réceptacle selon l'une des revendications précédentes, caracérisé en ce que l'un au moins des crochets (8a, 8b, 8c) prévus sur le bord libre de chaque étagère, porte un élément (14) faisant saillie vers le bas lorsque l'étagère est relevée à la verticale, cet élément étant apte à s'accrocher sur le fil horizontal (10) situé à ce niveau sur la paroi (3), sur laquelle s'articule l'étagère.

**Patentansprüche**

1. Lager- oder Transportbehälter, wie ortsfester oder mobiler Vorratsbehälter, Transportwagen o. dgl., dessen beide vertikale und gegenüber angeordnete Seitenwände aus Gittern von Metalldrähten gebildet sind und der einen oder mehrere Klappböden aufweist, die an einer der Seitenwände schwenkbar gelagert und in der Gebrauchsstellung an der anderen Seitenwand vermittels an ihrem freien Rand vorgesehene Haken festlegbar sind, dadurch gekennzeichnet,

– daß jeder der Klappböden (6) vermittels eines Elements (11) an der entsprechenden Seitenwand (3) schwenkbar gelagert ist, das eine gewisse Freiheit zum Gleiten des Klappbodens nach unten erbringt, wenn er vertikal gegen die Seitenwand (3) aufgerichtet ist,

– daß diese gleiche Seitenwand (3) einen horizontal angeordneten Draht (10) aufweist, der geringfügig innerhalb des Niveaus der Haken (8a, 8b, 8c) am freien Ende jedes Klappbodens (6) im aufgerichteten Zustand angeordnet ist,

– und daß mindestens einer der Haken (8b) derart ausgebildet ist, daß er sich an dem horizontalen Draht (10) verhaken kann, wenn der betreffende Klappboden (6) nach dem Aufrichten gegen die Seitenwand nach unten geglitten ist.

2. Behälter nach Anspruch 1, dadurch gekennzeichnet, daß jeder der am freien Ende jedes Klappbodens (6) angeordneten Haken (8a, 8b, 8c) einen Bereich (13) aufweist, der so gebogen ist, daß er nach dem Aufrichten des Klappbodens in die Vertikale eine horizontale Schulter zum Anlehnen gegen den horizontalen Draht (10) bildeet, der in dieser Höhe an der Seitenwand (3) angeordnet ist, gegen die ein Klappboden schwenkt.

3. Behälter nach einem der vorangehenden Ansprüche, dadurch gekennzeichnet, daß mindestens einer der am freien Ende jedes Klappbodens angeordneten Haken (8a, 8b, 8c) ein nach unten vorstehendes Element (14) trägt, wenn die Klappboden vertikal aufgerichtet ist, und daß das Element an dem horizontalen Draht (10) verhakbar ist, der in dieser Höhe an der Seitenwand (3) angeordnet ist, gegen die der Klappboden schwenkt.

**Claims**

1. A storage or transport container, such as a fixed or movable container or a transport cart, having two opposed vertical walls constituted by metal wire grids, and containing one or several fold-away shelves hinged to one of said walls and capable of being hooked to the other wall in their position of use by means of hooks provided on their free edge, **characterized** in that :

– each of said shelves (6) is hinged to the corresponding wall (3) by means of an element (11) affording some freedom for allowing said shelf to slide slightly downwards after being raised vertically alongside said wall (3);

– this same wall (3) comprises a horizontal wire (10) located slightly below the level of the hooks (8a, 8b, 8c) provided on the free edge of each shelf(6) when said shelf is thus raised vertically;

– at least one (8b) of said hooks is shaped so that it may hook onto the said horizontal wire (10) when the corresponding shelf (6) has been subjected to such a downward sliding displacement after having been raised alongside the aforesaid wall (3).

2. A container according to Claim 1, characterized in that each of the hooks (8a, 8b, 8c) provided on the free edge of each fold-away shelf (6) is formed at first with a bent portion (13) being bent in such manner that, after said shelf has been raised to its vertical position, said bent portion forms a horizontal shoulder capable of resting against the horizontal wire (10) placed at the corresponding level on the wall (3) against which the shelf folds away.

3. A container according to one of the preceding Claims, characterized in that at least one of the hooks (8a,8b,8c) provided on the free edge of each shelf carries an element (14) protruding downwards when the shelf is raised vertically, said element being adapted for hooking itself to the horizontal wire (10) located at the corresponding level on the wall (3) against which the shalf folds away.

FIG. 1

FIG. 2

FIG. 3

FIG. 4